(19)

**Europäisches Patentamt**
**European Patent Office**
**Office européen des brevets**

(11) **EP 4 321 325 A1**

(12) **EUROPEAN PATENT APPLICATION**

(43) Date of publication:
**14.02.2024 Bulletin 2024/07**

(21) Application number: **22189947.9**

(22) Date of filing: **11.08.2022**

(51) International Patent Classification (IPC):
**B29C 64/194** (2017.01)   **B29C 64/371** (2017.01)
**B33Y 10/00** (2015.01)   **B33Y 30/00** (2015.01)
**B33Y 40/00** (2020.01)   **B22F 10/50** (2021.01)
**B22F 12/70** (2021.01)

(52) Cooperative Patent Classification (CPC):
(C-Sets available)
**B29C 64/194; B22F 10/18; B22F 10/368;**
**B22F 10/50; B22F 12/50; B22F 12/70; B33Y 10/00;**
**B33Y 30/00; B33Y 40/00;** B22F 12/20; B22F 12/53;
B22F 2999/00; B29C 64/118; B29C 64/135;
B29C 64/147;                              (Cont.)

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicants:
• **terraplasma GmbH**
**85748 Garching (DE)**

• **AprintaPro GmbH**
**1230 Wien (AT)**

(72) Inventor: **The designation of the inventor has not yet been filed**

(74) Representative: **Vossius & Partner**
**Patentanwälte Rechtsanwälte mbB**
**Siebertstraße 3**
**81675 München (DE)**

(54) **ADDITIVE MANUFACTURING APPARATUS, SYSTEM, METHOD, AND USE**

(57)      An additive manufacturing apparatus or system (60) comprises a supply mechanism (61) operative to supply material for additive manufacturing, at least one gas flow channel (40) operative to supply a gas flow (30) to a region (11) at which the material is incorporated into an article (10) to be manufactured by additive manufacturing, and a plasma source (20a, 20b) operative to generate a plasma at a distance from the region (11) at which the material is incorporated into the article (10) to be manufactured, to cause at least one reactive species and/or at least one excited species to be generated and entrained in the gas flow (30) and delivered to the region (11) in the gas flow (30).

FIG. 5

EP 4 321 325 A1

(52) Cooperative Patent Classification (CPC): (Cont.)
B29C 64/30; C22C 1/05

C-Sets
**B22F 12/50, B22F 2202/13;**
B22F 2999/00, B22F 10/18, B22F 10/50,
B22F 2202/13

**Description**

TECHNICAL FIELD

The invention relates to manufacturing techniques. The invention relates to an apparatus, a system, and a method that employ a plasma source for modifying characteristics of an article and/or for enhancing a manufacturing process.

BACKGROUND

Additive manufacturing techniques and other techniques that allow characteristics of an article to be enhanced have attracted considerable attention in view of their versatility. For illustration, additive manufacturing techniques such as (without limitation) three-dimensional (3D) printing are considered attractive in view of their wide applicability and versatility.

Electrons and/or ions of a plasma may be used in association with such manufacturing or surface modification techniques. Techniques in which electrons and/or ions of a plasma generated by a plasma source bring about a desired modification of material characteristics of an article may require the plasma source to be positioned in close proximity to a location at which the article is treated. For illustration, in order to allow electrons and/or ions of a plasma to interact with a region of the article, the plasma source has to be located in sufficient close proximity to that region so that the electrons and/or ions can reach the desired region of the article. This may be associated with various drawbacks, such as limitations with regard to the geometry of the manufacturing apparatus. Some manufacturing techniques may make it notoriously difficult to position a plasma source in close proximity to the location at which treatment of the article is desired.

SUMMARY

There is a need for enhanced techniques that allow characteristics of a material or article to be modified. There is also a need for techniques that allow a plasma source to be utilized while mitigating at least some of the shortcomings of conventional techniques with regard to plasma source positioning. There is also a need for techniques that allow modifications of a material or article to be implemented with the use of a plasma source, but without being limited to an interaction of a material or article with the electrons and/or ions that are generated by the plasma source itself.

Apparatuses, systems, and methods are provided in which a plasma source is positioned at a distance from a location at which a material and/or article is modified (e.g., at which material is incorporated into the article). The apparatuses, systems, and methods may take advantage of gas-plasma interactions to generate reactive and/or excited species that are then transported to the material and/or article to bring about a desired modification. It is possible but not required for the electrons and/or ions generated by the plasma source itself to also reach the material or article to be modified in significant numbers. Apparatuses, systems, and methods may take advantage of plasma-gas interaction pathways (such as plasma-air chemical reactions) to generate reactive and/or excited species that reach the material or article for effecting a desired modification of its characteristics. Apparatuses, systems, and methods may also utilize a convective gas flow operative to transport the reactive and/or excited species by a convective transport mechanism. The plasma source may be arranged in a gas flow channel (e.g., in a channel for conveying a cooling gas such as cooling air), without being limited thereto. A flow velocity of the gas flow may be set or adjusted (using open-loop control or closed-loop control) in such a manner that desired reactive and/or excited species created by gas-plasma interactions (e.g., air-plasma chemistry) can reach the material or article. The flow velocity may also be set such that the ions and/or electrons created by the plasma source are unlikely to reach the material or article that is to be modified.

An additive manufacturing apparatus or system may comprise a supply mechanism operative to supply material for additive manufacturing. The apparatus or system may comprise at least one gas flow channel operative to supply a gas flow to a region at which the material may be incorporated into an article to be manufactured by additive manufacturing. The apparatus or system may comprise a plasma source operative to generate a plasma at a distance from the region at which the material may be incorporated into the article to be manufactured, to cause at least one reactive species and/or at least one excited species to be generated and entrained in the gas flow and delivered to the region in the gas flow.

The at least one plasma source may comprise a plasma source arranged within the gas flow channel.

The at least one plasma source may comprise a plasma source arranged on or along an inner surface of a circumferential wall of the gas flow channel.

The at least one plasma source may comprise a plasma source arranged adjacent the gas flow channel.

The at least one plasma source may comprise a plasma source arranged on or along an outer surface of a circumferential wall of the gas flow channel.

The gas flow channel may be operative to supply a flow of at least one cooling gas.

The apparatus or system may further comprise a cooling gas source, e.g. a fan. The cooling gas source may be operative to provide a gas that impinges on the article for cooling the region.

The apparatus or system may further comprise a temperature control mechanism operative to control a temperature of the cooling gas to aid in solidification of the material.

The additive manufacturing apparatus or system may be operative to set a flow velocity of the gas flow, e.g. such that the flow velocity multiplied by a formation time of the at least one reactive species and/or at least one excited species is less than a distance between the plasma source and the region.

The distance may be measured along a gas flow path extending along the gas flow channel.

Alternatively or additionally, the additive manufacturing apparatus or system may be operative to set a flow velocity of the gas flow such that the flow velocity multiplied by a life time of the at least one reactive species and/or at least one excited species may be greater than a distance between the plasma source and the region.

The distance may be measured along a gas flow path extending along the gas flow channel.

The supply mechanism may comprise a discharge orifice for the material.

The discharge orifice may comprise or may be a discharge nozzle or discharge nozzle opening.

The additive manufacturing apparatus or system may be operative to set a flow velocity of the gas flow such that the flow velocity multiplied by a formation time of the at least one reactive species and/or at least one excited species may be less than a distance between the plasma source and the discharge orifice, the distance being measured along a gas flow path extending along the gas flow channel.

Alternatively or additionally, the additive manufacturing apparatus or system may be operative to set a flow velocity of the gas flow such that the flow velocity multiplied by a life time of the at least one reactive species and/or at least one excited species may be greater than a distance between the plasma source and the discharge orifice, the distance being measured along a gas flow path extending along the gas flow channel.

The additive manufacturing apparatus or system may comprise at least one actuator operative to displace the discharge orifice along a movement direction.

The at least one gas flow channel may comprise first and second gas outlet areas spaced along the movement direction.

The at least one gas flow channel may comprise a ring-shaped gas outlet surrounding the discharge orifice.

The plasma source may be operative to cause at least one reactive species to be generated and entrained in the gas flow.

The at least one reactive species may be operative to increase surface wettability and/or adhesion strength between layers in the additive manufacturing.

The reactive species may comprise ozone and/or polar OH groups and/or polar ON groups.

The plasma source may be operative to cause at least one excited species to be generated and entrained in the gas flow.

The at least one excited species may be operative to effect Penning ionization for surface activation and/or modification.

The plasma source may be a Surface Micro-Discharge (SMD) plasma source.

A structured electrode of the SMD plasma source may extend along a longitudinal axis of at least a portion of the gas flow channel.

The apparatus or system may comprise a control system operative to control operation of the apparatus or system such that one, several, or all of the following apply:

- the apparatus or system may comprise an actuator operative to position the plasma source such that plasma may be produced at a distance of at least 1 cm and/or at most 6 cm from the region at which the material may be incorporated into the article to be manufactured (preferably measured along the flow path);
- the at least one gas flow channel may be dimensioned such that a flow velocity of the gas flow may be at least 10 m/s;
- the plasma source may be operative to operate in oxygen plasma mode;
- a sum of formation time and life time of excited species may be at least 5 ms;
- a sum of formation time and life time of species that are capable of producing electrons by a Penning effect may be at least 5 ms;
- the apparatus or system may be operative such that an operation temperature of an electrode of the plasma source may be less than or equal to 60° C;
- the apparatus or system is operative to provide a reactive species flux of at least $10^{10}$/cm$^2$s, preferably at least $10^{14}$/cm$^2$s, more preferably at least $10^{17}$/cm$^2$s;
- the apparatus or system is operative to provide a reactive species flux of at most $10^{25}$/cm$^2$s, preferably at most $10^{22}$/cm$^2$s, more preferably at most $10^{19}$/cm$^2$s;
- the apparatus or system may be operative to provide a reactive species flux of at least $10^{17}$/cm$^2$s and/or at most $10^{19}$/cm$^2$s;
- the apparatus or system may be operative to provide surface activation in proximity to the region at which the material may be incorporated into the article to be manufactured and prior to incorporation of the material into the article.

The apparatus or system may be an apparatus or system for enhancing adhesion between layers applied during additive manufacturing.

The apparatus or system may be or may comprise a three-dimensional printing apparatus or system. The apparatus or system may be or may comprise a three-dimensional printing apparatus for printing polymeric materials, e.g. a Fused Filament Fabrication (FFF) apparatus, a Stereolithography (SL) apparatus, a Laminated Object Manufacturing (LOM) apparatus, or for printing metals, e.g. a Selective Laser Sintering (SLS) apparatus.

An additive manufacturing method according to the invention may comprise supplying material for additive manufacturing. The method may comprise supplying, via at least one gas flow channel, a gas flow to a region at which the material may be incorporated into an article to be manufactured by additive manufacturing. The method may comprise generating, by a plasma source, a plasma at a distance from the region at which the material may be incorporated into the article to be manufactured, to thereby cause at least one reactive species and/or at least one excited species to be generated and entrained in the gas flow and delivered to the region in the gas flow.

The additive manufacturing method may be performed by the additive manufacturing apparatus or system of an embodiment. The additive manufacturing method may be an added manufacturing method making objects from polymeric materials, e.g. Fused Filament Fabrication (FFF), Stereolithography (SL), or Laminated Object Manufacturing (LOM). Alternatively, the additive manufacturing method may be an added manufacturing method for making objects from metals, e.g. Selective Laser Sintering (SLS).

The at least one plasma source used in the method may comprise a plasma source arranged within the gas flow channel.

The at least one plasma source used in the method may comprise a plasma source arranged on or along an inner surface of a circumferential wall of the gas flow channel.

The at least one plasma source used in the method may comprise a plasma source arranged adjacent the gas flow channel.

The method may comprise supplying a flow of at least one cooling gas via the gas flow channel.

The method may comprise operating a cooling gas source (e.g., a fan) to generate the flow of the at least one cooling gas. The method may comprise operating the cooling gas flow to generate the flow of the at least one cooling gas so that it impinges on the article for cooling the region.

The method may comprise operating a temperature control mechanism to control a temperature of the cooling gas to aid in solidification of the material.

The method may comprise setting, by a control system, a flow velocity of the gas flow, e.g. such that the flow velocity multiplied by a formation time of at least some of the reactive species and/or at least some of the excited species is larger than a distance between the plasma source and the region. The distance may be measured along a gas flow path extending along the gas flow channel. This is one way in which to exclude unwanted species.

The method may comprise setting, by a control system, a flow velocity of the gas flow, e.g. such that the flow velocity multiplied by a formation time plus life time of at least some of the reactive species and/or at least some of the excited species is less than a distance between the plasma source and the region. The distance may be measured along a gas flow path extending along the gas flow channel. This is a second way in which to exclude unwanted species.

Alternatively or additionally, the method may comprise setting a flow velocity of the gas flow such that the flow velocity multiplied by a formation time of the at least one reactive species and/or at least one excited species may be smaller than a distance between the plasma source and the region, and that the flow velocity multiplied by a formation time plus life time of the at least one reactive species and/or at least one excited species may be greater than a distance between the plasma source and the region. The distance may be measured along a gas flow path extending along the gas flow channel. These species can reach the target.

Alternatively or additionally, the method may comprise setting a flow velocity of the gas flow such that: (i) the flow velocity multiplied by a formation time of at least one first reactive species and/or at least one first excited species as well as the flow velocity multiplied by a formation time of at least one second reactive species and/or at least one second excited species is smaller than a distance between the plasma source and the region, and (ii) that the flow velocity multiplied by a formation time plus life time of the at least one first reactive species and/or at least one first excited species is greater than a distance between the plasma source and the region, and (iii) the flow velocity multiplied by a formation time plus life time of at least one second reactive species and/or at least one second excited species is less than a distance between the plasma source and the region. The distance may be measured along a gas flow path extending along the gas flow channel. In this case the first species can reach the target and the second species cannot.

The method may comprise supplying material for additive manufacturing via a supply mechanism, e.g. in FFF. The supply mechanism used in the method may comprise a discharge orifice for the material.

The discharge orifice may comprise or may be a discharge nozzle or discharge nozzle opening.

The method may comprise setting a flow velocity of the gas flow such that the flow velocity multiplied by a formation time of the at least one reactive species and/or at least one excited species may be less than a distance between the plasma source and the discharge orifice, the distance being measured along a gas flow path extending along the gas flow channel.

Alternatively or additionally, the method may comprise setting a flow velocity of the gas flow such that the flow velocity multiplied by a life time of the at least one reactive species and/or at least one excited species may be greater than a distance between the plasma source and the discharge orifice, the distance being measured along a gas flow path extending along the gas flow channel.

The method may comprise operating at least one actuator operative to displace the discharge orifice along a movement direction.

The at least one gas flow channel used in the method may comprise first and second gas outlet areas spaced along the movement direction.

The at least one gas flow channel used in the method may comprise a ring-shaped gas outlet surrounding the discharge orifice.

The method may comprise causing at least one reactive species to be generated and entrained in the gas flow.

The at least one reactive species may be operative to increase surface wettability and/or adhesion strength between layers in the additive manufacturing.

The reactive species may comprise ozone and/or polar OH groups and/or polar ON groups.

The method may comprise causing at least one excited species to be generated and entrained in the gas flow.

The at least one excited species may be operative to effect Penning ionization for surface activation and/or modification.

The plasma source used in the method may be a Surface Micro-Discharge (SMD) plasma source.

A structured electrode of the SMD plasma source used in the method may extend along a longitudinal axis of at least a portion of the gas flow channel.

The apparatus or system may comprise a control system operative to control operation of the apparatus or system such that one, several, or all of the following apply:

- the apparatus or system may comprise an actuator operative to position the plasma source such that plasma may be produced at a distance of at least 1 cm and/or at most 6 cm from the region at which the material may be incorporated into the article to be manufactured (preferably measured along the flow path);
- the at least one gas flow channel may be dimensioned such that a flow velocity of the gas flow may be at least 0. 5 m/s, preferably at least 1 m/s, more preferably at least 5 m/s, even more preferably at least 10 m/s;
- the plasma source may be operative to operate in oxygen plasma mode;
- a sum of formation time and life time of excited species may be at least 5 ms;
- a sum of formation time and life time of species that are capable of producing electrons by a Penning effect may be at least 5 ms;
- the apparatus or system may be operative such that an operation temperature of an electrode of the plasma source may be less than or equal to 60° C;
- the apparatus or system is operative to provide a reactive species flux of at least $10^{10}$/cm$^2$s, preferably at least $10^{14}$/cm$^2$s, more preferably at least $10^{17}$/cm$^2$s;
- the apparatus or system is operative to provide a reactive species flux of at most $10^{25}$/cm$^2$s, preferably at most $10^{22}$/cm$^2$s, more preferably at most $10^{19}$/cm$^2$s;
- the apparatus or system may be operative to provide a reactive species flux of at least $10^{17}$/cm$^2$s and/or at most $10^{19}$/cm$^2$s;
- the apparatus or system may be operative to provide surface activation in proximity to the region at which the material may be incorporated into the article to be manufactured and prior to incorporation of the material into the article.

The apparatus or system may be an apparatus or system for enhancing adhesion between layers applied during additive manufacturing.

The apparatus or system may be or may comprise a three-dimensional printing apparatus or system.

There is also disclosed a use of the manufacturing apparatus or system for plasma modification and/or functionalization of soft matter in additive manufacturing.

There is also disclosed a use of the manufacturing apparatus or system for increasing adhesion between successive layers applied during additive manufacturing.

There is also disclosed a use of the manufacturing apparatus or system for increasing a strength of the article that is manufactured.

Various effects are attained by the apparatuses, systems, methods, and uses according to embodiments. The apparatuses, systems, methods, and uses may allow modifications to be performed on a material and/or article, taking advantage of reactive and/or excited species generated by gas-plasma interaction (e.g., by air-plasma reaction). The apparatuses, systems, methods, and uses may allow a material and/or surface to be modified while accommodating a spacing between the plasma source and surface to be treated that is so large that ions and/or electrons generated by the plasma source do not necessarily reach the surface to a significant fraction. The apparatuses, systems, methods, and uses mitigate the geometrical constraints imposed on plasma source positioning in techniques in which the electrons and/or ions generated by the plasma source are themselves the dominant mechanism for surface modification.

BRIEF DESCRIPTION OF THE DRAWINGS

Embodiments of the invention will be described with reference to the drawings in which similar or identical reference numerals designate similar or identical components.

Figure 1 is a schematic representation of components of an additive manufacturing apparatus or system.
Figure 2 is a schematic representation of components of an additive manufacturing apparatus or system.
Figure 3 is a schematic representation of components of an additive manufacturing apparatus or system.
Figure 4 shows graphs that illustrate the spatial variation of plasma concentration and reactive and/or excited species concentration.
Figure 5 is a schematic representation of an additive manufacturing apparatus or system.
Figure 6 is a schematic representation of an additive manufacturing apparatus or system.
Figure 7 is a schematic representation of an additive manufacturing apparatus or system.
Figure 8 is a schematic representation of an additive manufacturing apparatus or system.
Figure 9 is a schematic representation of an additive manufacturing apparatus or system.
Figure 10 is a schematic representation of gas flow channel outlets of an additive manufacturing apparatus or system.
Figure 11 is a schematic representation of a plasma source of an additive manufacturing apparatus or system.
Figure 12 is a schematic representation of a plasma source of an additive manufacturing apparatus or system.
Figure 13 is a schematic representation of a plasma source of an additive manufacturing apparatus or system.
Figure 14 is a schematic representation of an additive manufacturing apparatus or system.
Figure 15 is a schematic representation of an additive manufacturing apparatus or system.
Figure 16 is a flow chart of a method.
Figure 17 is a flow chart of a procedure that may be employed in the method of Figure 16.
Figure 18 is a flow chart of a procedure that may be employed in the method of Figure 16.
Figure 19 is a flow chart of a procedure that may be employed in the method of Figure 16.
Figure 20 shows graphs representing an ozone concentration as a function of time.
Figure 21 shows a graph representing an ozone concentration as a function of volume flow rate.
Figure 22 shows graphs representing ozone concentration as a function of time for different operating regimes.
Figure 23 shows a graph representing an ozone concentration as a function of plasma source power.
Figure 24 shows graphs representing ozone concentration as a function of volume flow for different operating regimes.
Figure 25 shows a graph representing ozone concentration as a function of time for different frequencies.
Figure 26 shows a graph representing ozone concentration as a function of time.
Figure 27 shows a graph representing ozone concentration as a function of frequency.
Figure 28 shows a graph representing plasma power as a function of frequency.

DESCRIPTION OF EMBODIMENTS WITH REFERENCE TO THE DRAWINGS

Embodiments will be described with reference to the drawings in which identical or similar reference numerals are used to designate components having identical or similar configuration and/or operation.
While some embodiments will be described in association with specific additive manufacturing techniques, such as three-dimensional (3D) printing, embodiments of the invention may be more broadly applied in association with various manufacturing and/or processing techniques in which it is desired to modify characteristics, such as surface characteristics, of a material or of a product that is being manufactured.
Apparatuses, systems, and methods disclosed herein may be used for increasing the strength of printed three-dimensional structures without being limited thereto.
Features of the various embodiments may be combined with each other unless explicitly stated otherwise.
Apparatuses, systems, methods, and uses disclosed herein may be operative to take advantage of reactive and/or excited species of atoms or molecules that are generated by interaction of electrons and/or ions generated by a plasma source with a gas. The gas may be air, such as ambient air, without being limited thereto.
As used herein, the term reactive and/or excited species refers to atoms and/or molecules that are created by, e.g., reactions of a gas (such as ambient air) with a plasma.
In apparatuses, systems, methods, and uses disclosed herein, the plasma source may be positioned at a distance from the material and/or article to be treated, with the distance being so large that ions and/or electrons generated by the plasma source are unlikely to reach the material and/or article to be treated. The distance and other operating parameter may be set such that desired reactive and/or excited species of atoms or molecules generated by interaction of plasma and gas (such as ambient air) can reach the material and/or article to be treated.

The apparatuses, systems, methods, and uses may employ a convective gas flow to facilitate transport of reactive and/or excited species of atoms or molecules generated by interaction of plasma and gas (such as ambient air) to the material and/or article to be treated.

*Overview*

The apparatuses, systems, methods, and uses disclosed herein may be operative to provide a plasma that is spaced by a distance from the location at which modification of a material or article is desired. The apparatuses, systems, methods, and uses may be operative to take advantage of various reaction pathways between the generated plasma and a gas (such as ambient air) to create reactive and/or excited species.

Surface treatment by plasma interaction can bring about a number of beneficial effects. A plasma generator converts electric energy into the energy of charged and neutral particles - electrons, ions, atoms and molecules. In a gas (such as air), these particles of a plasma can produce chemical compounds of hydrogen, nitrogen and oxygen, in particular short-lived highly reactive species. Bombardment of the treatment surface with all or some constituent plasma species cleans and chemically activates the surface. In addition, at the contact points of discharge filaments the surface can locally reach high temperatures. This modifies the topography of the surface improving mechanical binding of adhesives, when they are applied within a sufficiently short time.

For direct plasma interactions (i.e., direct interaction of the surface with electrons and/or ions), it is necessary to bring the plasma source close to the surface to be treated, or alternatively to use plasma jets, which can build up a sufficiently long reach through a corresponding high flow speed. As already noted above, various shortcomings and challenges are associated with such approaches.

For Micro-Discharge plasma sources, the plasma production needs to be located closer than 2 mm to the treatment surface. Also, conductive treatment surfaces are favored, since they can be combined with the plasma generation in form of a dielectric barrier discharge (DBD) type plasma source. The required proximity has the potential of interfering with other manufacturing constraints during a process, a problem of particular relevance in 3D additive manufacturing.

For jet plasma sources, the required high gas (air) flow speeds needed to transport charged primary plasma particles to the surface can also interfere with the manufacturing process, in addition to the mass, size and operational problems involved in combining such sources with the manufacturing requirements.

These typical plasma-surface activation or modification techniques are generally physical. I.e., the modification of the surface is due to the interaction of energetic ions and electrons, which affect the surface structure in such a way that properties (e.g., adhesion) are modified.

The apparatuses, systems, and methods disclosed herein use the chemical pathway, where the plasma interacts with a carrier gas to produce excited and reactive neutral species, which live longer and interact with the treatment surface. The carrier gas may be air, but other gases and gas mixtures are also possible.

Restricting the surface treatment to longer-lived reactive species provides various effects which can be attained in isolation or combination. For illustration, it is possible to attain one or several of miniaturization of the plasma source, flexibility in positioning and easier integration into the manufacturing process.

While an increase in distance between the plasma source and the article surface can lead to a reduction in treatment efficiency, apparatuses, systems, and methods disclosed herein may be operative to address this challenge by one or more of: convective flow to increase a targeted transport of reactive and/or excited species; higher reactive and excited particle fluxes; and/or suitable plasma chemical design.

Thereby, the apparatuses, systems, and methods are operable to provide a desired energy per surface area and in a form in which the energy is operable to produce the desired surface modification.

The apparatuses, systems, and methods address the mechanical construction problem as well as electrical issues encountered in conventional plasma treatment techniques by one or several of the following:

- The apparatuses, systems, and methods utilize reactive and/or excited species produced by the gas-plasma interaction, and do not rely on direct ionization components created by the plasma source (i.e., the primary ions and/or electrons) for surface treatment.
- The plasma source may be a Surface Micro-Discharge (SMD) source. The SMD source facilitates integration into, e.g., an additive manufacturing process and apparatus in a manner that facilitates and enhances convective transport of reactive and/or excited species produced by the gas-plasma interaction. The SMD also provides ease of mounting and ease of establishing the required electrical connections.

8

- The plasma source may be arranged within or otherwise adjacent a gas flow channel. The location of the plasma source may be chosen such that it is spaced from the surface to be treated by a distance which is too large for the survival of primary electrons and ions. This increases flexibility for different 3D printing apparatuses.
- The physical and chemical processes that can be applied in the apparatuses, systems, and methods may involve one or several of localized thermal processes (e.g., de-excitation of species on the treatment surface), localized dissociative electron interactions (Penning ionisation), and/or chemical reactions (mainly Oxygen and Nitrogen based plasma-air chemistry). Conventional techniques of surface activation technology that rely on the interaction of primary ions and/or electrons with the surface do not take advantage of these processes.

The apparatuses, systems, and methods may be used for modifying characteristics of material that may be soft matter usable in additive manufacturing in various forms (paste, colloid, powder mix etc.) at elevated (thermoplastic) temperatures suitable for 3D printing. The physical and chemical processes that may be invoked in the apparatuses, systems, and methods are described next.

***Plasma Physical and Chemical Processes***

Plasma Chemical Products

Plasma discharges in air and other gases can produce excited neutral atoms and molecules as well as highly reactive chemical species, which on contact with the treatment surface initiate further chemical and physical processes. De-excitation, for instance, releases eV type energies locally (not much lower than the kinetic energies of the charged plasma components), with the important difference that excited atoms and molecules have a much longer life time (and travel distance) than the charged components.

For illustration, initial reactions in humid air plasma discharges cause polar OH and ON groups to be formed. These groups can be important in the treatment during, e.g., 3D additive manufacturing.

For further illustration, initial reactions in humid air plasma discharges cause reactive species, mainly of the Oxygen and Nitrogen group to be formed, which can break up bonds and promote the three-dimensional cross bonding of molecules. This increases the strength of components produced in, e.g., 3D additional manufacturing. In addition, reactions depositing functional chemical groups onto the substrate surface (e.g., polar OH and ON groups) can significantly increase the surface energy, improving the surface wettability and increasing the adhesion strength between the layers in 3D additive manufacturing.

Penning Ionisation

When an electronically excited gas-phase atom or molecule $G^*$ interacts with a target molecule M, Penning ionisation can occur. This process is possible when the target molecule has an ionisation potential lower than the excitation energy of the excited-state atom or molecule.

The collision results in the ionisation of the molecule yielding a cation $M^+$, an electron $e^-$, and a neutral gas molecule, G, in the ground state. Possible modes are:

$$G^* + M \rightarrow M^+ + e^- + G$$

or associative Penning Ionisation:

$$G^* + M \rightarrow MG^+ + e^-$$

Surface Penning ionisation (Auger Deexcitation) refers to the interaction of the excited-state gas with a surface S, resulting in the release of an electron:

$$G^* + S \rightarrow G + S^+ + e^-$$

The resulting surface charge is quickly redistributed.

Penning ionisation can be an important contributor for surface activation, especially in the interaction of excited atoms or molecules with soft matter. In the apparatuses, systems, and methods disclosed herein, where the plasma source is located upstream of the target in an air flow at such a distance that primary plasma particles (ions and electrons) are unlikely to reach the target, but the longer lived excited neutral particles (atoms or molecules) can - Penning ionisation may be an important process for surface activation and modification.

### Time Scale Considerations

Life time and transport of primary ions and electrons, and life time and transport of reactive and/or excited species resulting from plasma-gas interaction

For a SMD plasma source discharge in humid air, electron and ion impact reactions (i.e., reactions in which primary electrons and ions can cause modifications due to physical modification pathways) are believed to not be or to be less relevant after times of about 30 ms. Without wanting to be bound by theory, it is believed that only neutral reactions play a significant role after a time of about 30 ms. Thus, by positioning the plasma source sufficiently far from the surface to be modified, physical impact reactions can be reduced. A suitable choice for the distance is affected by the gas velocity v of a convective gas flow, as discussed in more detail herein.

Typical gas velocities of a cooling gas for additive manufacturing such as 3D printing or other 3D additive manufacturing are often from 1 to 15 m/s. For a plasma source positioned in the cooling gas flow, physical impact modifications caused by primary electrons or primary ions are unlike to occur if the distance d of the plasma source (measured, e.g., from the surface to the part of the plasma source that is closest to the surface, along the gas flow path) exceeds $v \cdot 30$ ms, where v designates the gas flow velocity.

Formation time, life time, and transport of reactive species

There are various reactive species for a plasma discharge in humid air (or other gases), including reactive species that are formed by a single reaction step and other reactive species that are formed by a more complex multi-stage process. The latter reactive species require more time to form, and the formation time depends on the density of the reactants, the reaction cross section, the number of reaction steps, the temperature, and other parameters.

Generally, reactive species, which may play an important role in surface treatment, do not come into existence instantly. There is a formation time that may be considered in the layout of the apparatuses, systems, and methods disclosed herein. More specifically, a plasma source which is too close to the treatment surface may not be able to employ some reactive species, because the necessary reactants have not been formed.

Reactive species also have a finite life time. The life time of the reactive species can be determined using numerical simulations or experimentally (e.g., by using a jet plasma source for determining the reactive species life time, e.g., based on travel distance along the jet). Thus, a plasma source which is too far from the treatment surface is not able to employ some reactive species, because the necessary reactants are not available any more.

Thus, in the apparatuses, systems, and methods disclosed herein, the plasma source position and/or convective velocity of a gas flow are selected in such a manner that the desired reactive species have formed and are still present when the gas flow in which they are entrained reaches the surface that is to be modified or otherwise treated.

I.e., for a plasma source positioned at a distance d from the surface (with the distance d being measured along the gas flow path, e.g. along a centerline of the gas flow path), the gas flow velocity v may be set such that the product of v times the formation speed of a desired reactive species is less than the distance d, and the product v times the life time of the desired reactive species is greater than the distance d.

### Example

For a convection speed of 10 m/s and a distance to the treatment surface of more than 1 cm only reactive species that survive after 1 ms can impact and functionalize the treatment surface. This includes mainly excited Oxygen molecules ($O_2^*$), Oxygen atoms (O) and Nitrogen atoms (N), as well as Ozone ($O_3$), water-based species (e.g., $H_2O_2$, $HO_2$, $H_2$, $HNO_3$), NOx (e.g., NO, $NO_2$, $NO_3$, $N_2O$ and $N_2O_5$). These can then interact with the treatment surface of, e.g., soft matter and modify it, e.g., by improving the adhesive strength.

Summary with regard to life time and gas flow velocity

The apparatuses, systems, and methods disclosed herein are operative to provide a plasma chemical pathway for surface treatment. The apparatuses, systems, and methods are suitable for treatmet of soft matter, in particular in the context of 3D additive manufacturing, without being limited thereto. Both theoretical analysis and experimental data have shown that it is advantageous to set a distance, d, between the plasma source and the treatment surface such that it fulfils the following equation:

$$vt_1 < d < vt_2 \qquad (1)$$

where v is the speed of the cooling flow (which advects the plasma produced species), $t_1$ is the production time of the species of interest (which can activate the surface), and $t_2$ is the life time of these species.

Species that can be obtained by plasma-gas chemistry in a respective case depend, e.g., on the gas. For a plasma-humid air discharge scenario, reactions are analyzed and provided in, e.g., Sakiyama et al., Phys.D, Appl. Phys. 45 (2012) 425201.

Due to the large number of species created by plasma-air interaction, it may be beneficial to organize the species into the following categories:

1. Reactive species. Polar OH and ON groups are examples. These species can significantly increase the surface energy, improving the surface wettability and increasing the adhesion strength between the layers in 3D additive manufacturing.
2. Excited species which can initiate Penning ionisation as a key process for surface activation and modification.
3. Excited species which deposit their energy of de-excitation in a localized region on the surface can enhance adhesion by thermal processes.

The choice for the optimum position of the plasma source and/or other operation parameters (such as gas flow velocity) may then be given by the range of species included in the surface treatment process. The respective values for the formation time (ti) and life time ($t_2$) for the desired species can be obtained experimentally or using numerical simulations.

An effect of the apparatuses, systems, and methods when used for surface activation of soft matter in 3D additive manufacturing lies in the greater flexibility of placing the plasma source a safe distance away from the treatment surface and in the possibility to use miniaturized (e.g., thin film electrodes) plasma sources, which affect the mechanics of the manufacturing process to much lesser degrees than conventional techniques.

### Apparatuses and Systems

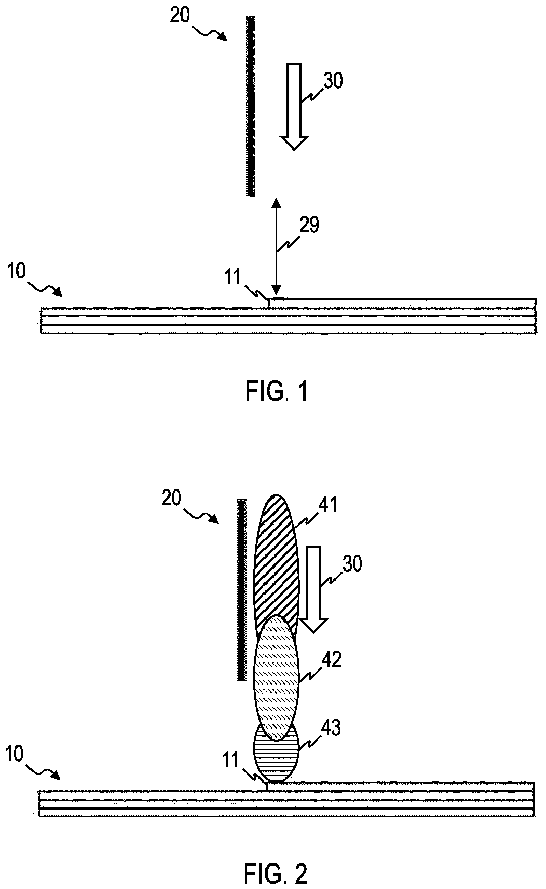

Figure 1 is a schematic partial view of an apparatus or system. The apparatus or system is operative for manufacturing an article 10 using additive manufacturing by 3D printing (it being understood that the principles disclosed herein are not limited to 3D printing). New material is added at a region 11 on a surface of the article 10 that is being manufactured.

The apparatus or system comprises a plasma source 20. The plasma source 20 may be a SMD source. The plasma source 20 is positioned a distance 29 away from the surface of the article 10 where material is incorporated into the article at region 11. The distance 29 may be determined along a flow path of a gas flow 30. The distance 29 may be determined between the point of the plasma source 20 that is closest to the region 11 (i.e., the end of the plasma source 20 that is located at the downstream side with respect to the flow direction of the gas flow 30).

The distance 29 is preferably set such that (i) primary ions and/or electrons formed by the plasma source 20 do not or at least not to a significant extent impinge on the surface at region 11, but (ii) at least one reactive and/or excited species that is formed by plasma gas interaction impinges on the surface at the region.

The gas flow 30 may be generated by a source of convective gas flow and/or a flow directing arrangement which may include gas passages for guiding the gas towards the article 10.

Figure 2 illustrates the apparatus or system in operation. Plasma is formed in a plasma generation region 41, where primary ions and/or electrons are formed by the plasma source 20. Downstream of the plasma generation region 41, excited and/or reactive species are formed by one- or multi-step processes in a region 42. At least an initial step of the excited and/or reactive species formation process, plasma-gas interactions take place to trigger the formation of the excited and/or reactive species. The excited and/or reactive species are transported to the region 11 in a transport region 43. In the transport region 43, the concentration of primary ions and/or electrons may decrease to substantially zero.

The excited and/or reactive species impinge on a surface of the article 10. For additive manufacturing, it may be desirable for the excited and/or reactive species to impinge on the surface of the article in a region in which new material is to be (but has not yet been) incorporated into the article shortly. Alternatively or additionally, it may be desirable for the excited and/or reactive species to impinge on the surface of the article in a region in which new material has just been incorporated into the article.

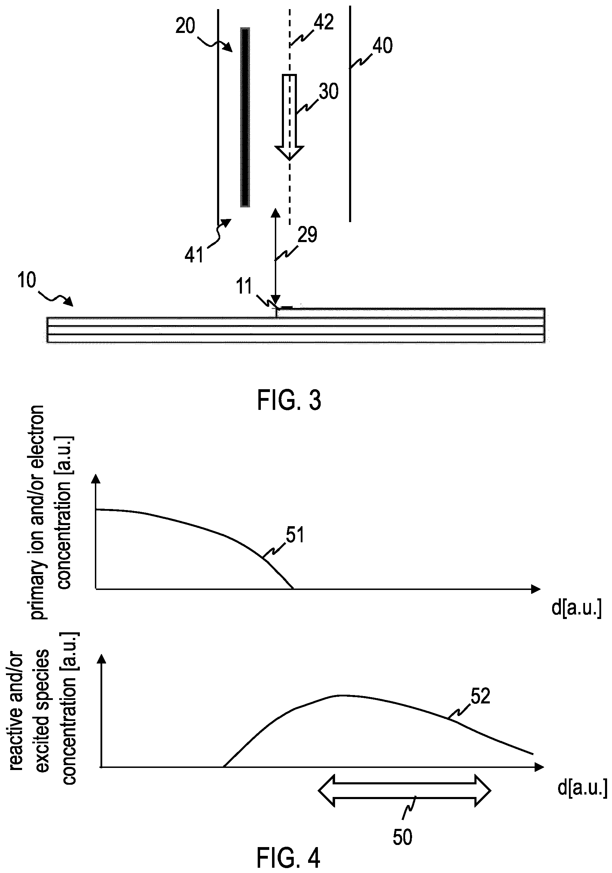

Figure 3 shows a partial view of an apparatus or system. The apparatus or system may comprise at least one channel 40 for guiding the gas flow 30 towards the article 10 as a convective flow. The at least one channel 40 may be or may comprise a cooling gas flow channel through which a coolant (such as cold air) is supplied to the article 10 for aiding solidification of material that has been added to the article 10.

The at least one channel 40 may have at least one gas outlet 41. The at least one channel 40 and/or the gas outlet 41 may be movable relative to the article 10. The apparatus or system may comprise an actuator for displacing the at least one channel 40 and/or the gas outlet 41 relative to the article 10.

The at least one channel 40 may be arranged in a fixed positional relationship relative to a supply channel through which material to be incorporated into the article 10 is supplied.

Alternatively, the at least one channel 40 may be provided such that at least the gas outlet 41 is repositionable relative to a discharge orifice through which material to be incorporated into the article 10 is discharged.

The at least one channel 40 may have a center axis 42. The distance 29 may be determined with respect to the center axis 42, i.e., generally along the gas flow path defined by the at least one channel 40. While a straight channel 40 is shown in Figure 3, the channel 40 may (and often will be) comprise angled and/or curved segments.

The at least one channel 40 may have an inner cross section. The inner cross section may be variable along the center axis 42. In this case, the flow velocity v of the gas flow may be determined as an averaged flow velocity, the average being obtained by averaging the velocity along the center axis (e.g., by integrating the velocity along the center axis and dividing the integral by the distance obtained by a length integral of the center axis).

Figure 4 is a graph which schematically depicts a concentration 51 of primary ions and/or electrons as a function of distance along the channel 40 (top panel). Figure 4 also shows a concentration 52 of a desired reactive and/or excited species as a function of distance along the channel 40 (bottom panel). The concentration variations are such that they allow the plasma source 20 to be located to have a distance d within a distance range 50 from the location at which surface modification is to be performed, such that (i) primary ions and/or electrons formed by the plasma source 20 do not or at least not to a significant extent impinge on the surface at region 11, but (ii) at least one reactive and/or excited species that is formed by plasma gas interaction impinges on the surface at the region.

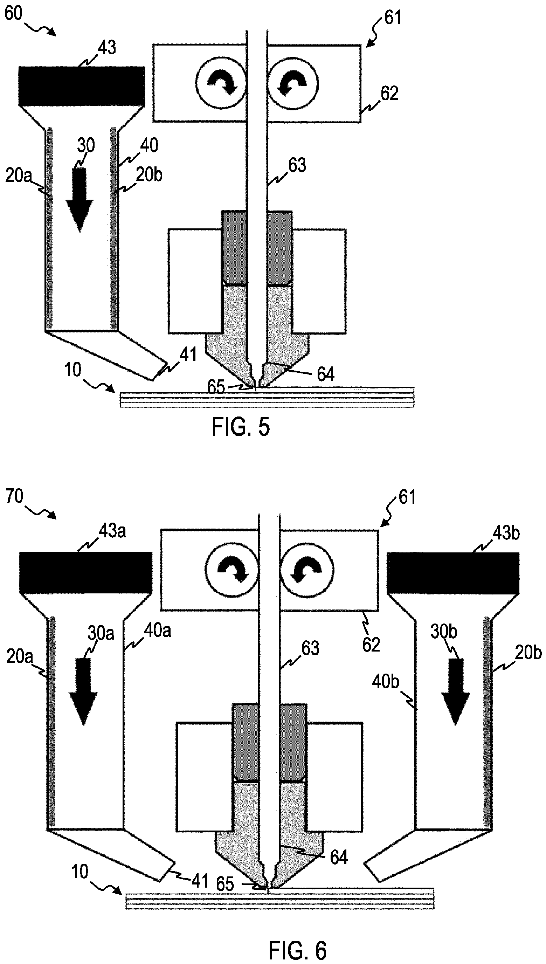

Figure 5 shows an apparatus or system 60. The apparatus or system 60 is an additive manufacturing apparatus or system. The apparatus or system 60 comprises a supply mechanism 61 for supplying material to be incorporated into the article. The supply mechanism 61 may comprise a source 62 of the material (which may comprise a pump or other displacement mechanism, e.g. gears and/or rollers), a supply channel 63, and a discharge orifice 65. The supply channel 63 may comprise at least one tapering section 64 to form a nozzle geometry.

The apparatus or system 60 comprises a gas supply system that includes a source 43 of pressurized gas and at least one gas flow channel 40 having a gas outlet 41. A flow velocity of the gas flow 30 may be adjustable. Two or more plasma sources 20a, 20b may be mounted within the gas flow channel 40. The plasma sources 20a, 20b may be arranged along, in particular on, the inner wall(s) of the gas flow channel 40. The plasma sources 20a, 20b may be SMD plasma sources.

During operation of the apparatus or system 60, the source 43 of pressurized gas and the plasma sources 20a, 20b are controlled such that reactive and/or excited species obtained by plasma gas interaction are discharged via the gas outlet 41 and impinge on the article 10. The reactive and/or excited species may be guided onto the article 10 at a location at which new material is going to be added. I.e., the reactive and/or excited species may be guided onto the article 10 at a location that is upstream of a current position of the discharge orifice 65 relative to a movement direction of the discharge orifice 65.

The gas outlet 41 may be repositionable relative to the discharge orifice 65 to accommodate a change in movement direction of the nozzle orifice 65. The apparatus or system 60 may comprise a repositioning actuator for repositioning the gas outlet 41 may be repositionable relative to the discharge orifice 65, responsive to a change in movement direction of the nozzle orifice 65.

Figure 6 shows an apparatus or system 70. The apparatus or system 70 is an additive manufacturing apparatus or system.

The apparatus or system 70 comprises a gas supply system that includes a first source 43a of pressurized gas and a first gas flow channel 40a having a first gas outlet 41. A flow velocity of the gas flow 30a may be adjustable. At least one first plasma source 20a may be mounted within the first gas flow channel 40a. The least one first plasma source 20a may be arranged along, in particular on, the inner wall(s) of the first gas flow channel 40a. The at least one first plasma source 20a may be an SMD plasma source.

The gas supply system includes a second source 43a of pressurized gas and a second gas flow channel 40b having a second gas outlet. A flow velocity of the gas flow 30b may be adjustable. At least one second plasma source 20b may be mounted within the second gas flow channel 40b. The least one second plasma source 20b may be arranged along, in particular on, the inner wall(s) of the second gas flow channel 40b. The at least one second plasma source 20b may be an SMD plasma source.

The first and second plasma sources 20a, 20b may be operated concurrently or in an alternating manner. The apparatus or system 60 may be operative to operate the first and second plasma sources 20a, 20b may be operated concurrently to modify both the surface of the last layer prior to addition of a new layer, and the surface of the newly added layer just after it has been added. The apparatus or system 60 may be operative to operate the first and second plasma sources 20a, 20b in an alternating manner, to ensure that surface treatment occurs prior to addition of new material.

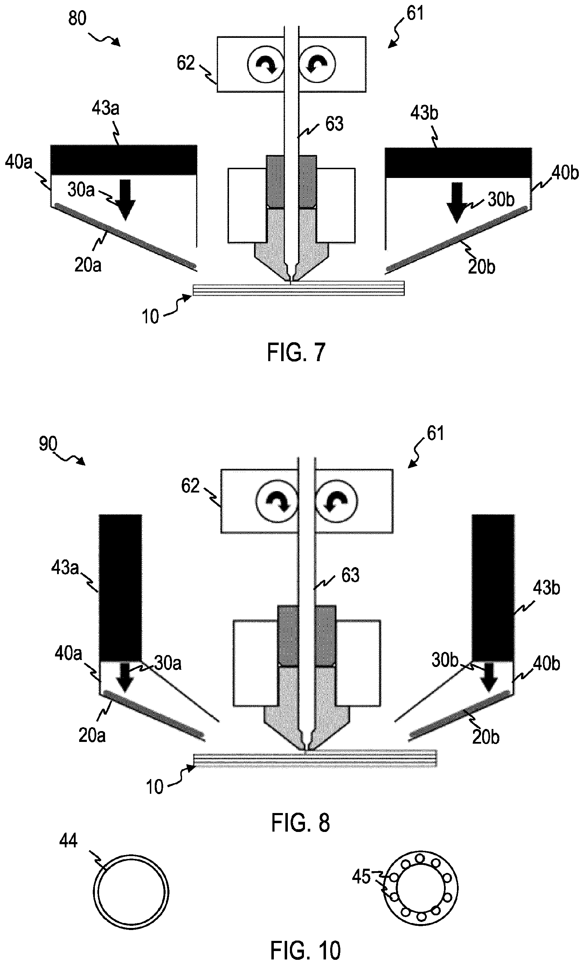

Figures 7 and 8 show further variants of an apparatus or system 80, 90 which is an additive manufacturing apparatus or system. In the apparatus or system 80, 90, the plasma sources 20a, 20b are provided in channels 40a, 40b having a flat geometry. The plasma sources 20a, 20b may respectively be mounted on an outer wall of the channels 40a, 40b.

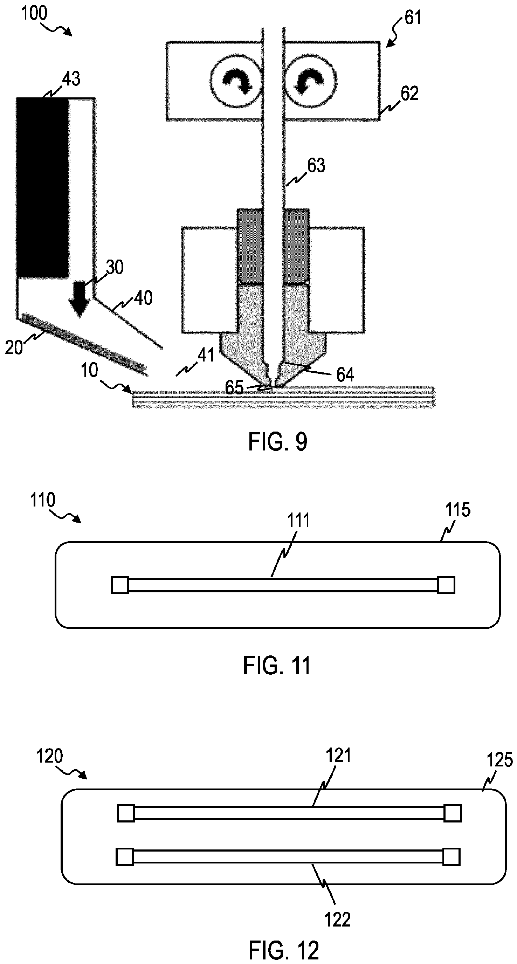

Figure 9 shows a further variant of an apparatus or system 100 which is an additive manufacturing apparatus or system. The apparatus or system 100 has only one gas flow channel 40 with at least one plasma source 20 provided therein. Several plasma sources 20 may be packed within the gas flow channel 40, e.g. densely packed.

Figure 10 shows two examples for outlet geometries for the at least one gas flow channel 40. The left panel of Figure 10 shows an outlet orifice having an annular shape 44. The annular shape 44 may be centered around the discharge orifice 65. The right panel of Figure 10 shows a geometry in which the gas outlet comprises a plurality of apertures 45 that are arranged on or along a circular line. The plurality of apertures 45 may be arranged to surround the discharge orifice 65.

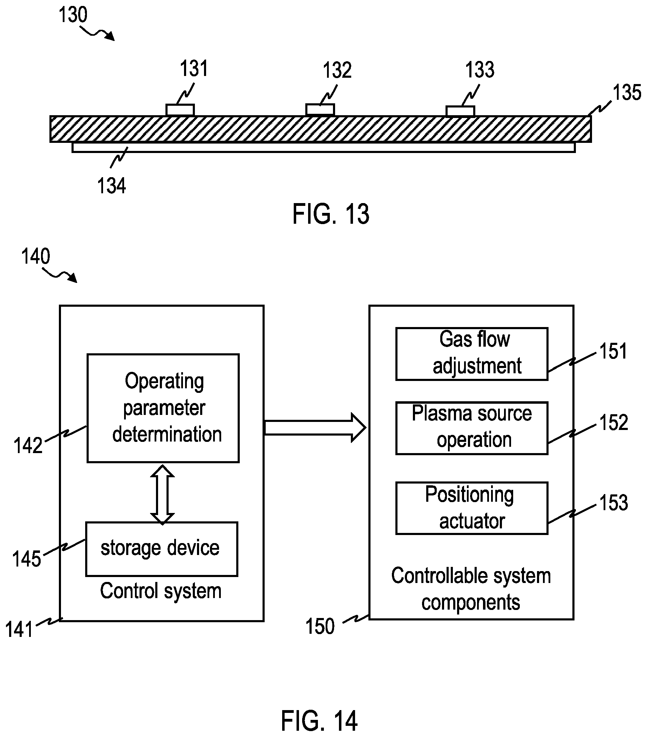

Figures 11 to 13 show plasma sources that may be used in the apparatus or system. The plasma source(s) may respectively be SMD plasma sources. Figures 11 and 12 show plan views, and Figure 13 shows a cross-sectional view.

Figures 11 and 12 show SMD plasma sources 110, 120 having a substrate 115, 125 of a dielectric material. In SMD plasma source 110, one structured electrode 111 is provided on the substrate 115. In SMD plasma source 120, two structured electrodes 121, 122 are provided on the substrate 125.

Figure 13 shows an SMD plasma source 130 having a substrate 135 of a dielectric material on which three structured electrodes 131-133 are mounted. A rear electrode 134 is provide on a surface of the substrate 135 opposite to the surface on which the structured electrodes 131-133 are mounted.

The plasma sources and/or the structured electrodes may have a configuration as described in WO 2020/151833 A1, WO/2017/013211 A1, or EP 2 399 432 A1, each of which is incorporated herein by reference in its entirety.

Figure 14 is a block diagram of an apparatus or system 140 which may be an additive manufacturing apparatus or system 140.

The apparatus or system 140 may comprise several controllable system components 150. The controllable system components may comprise one or several of: a gas flow adjustment 151, a plasma source operation control 152, a positioning actuator 153. The gas flow adjustment 151 may be operable to adjust, under control of a control system 141, a volume flow rate and/or flow velocity of the gas flow in channel 40. The plasma source operation control 152 may be operable to adjust, under control of the control system 141, an operation frequency and/or power of the plasma source. The positioning actuator 153 may be operable to adjust, under control of the control system 141, a position of the gas outlet 41 and/or the discharge orifice 65. The positioning actuator 153 may be operable to adjust, under control of the control system 141, a position of the gas outlet 41 relative to the discharge orifice 65.

The apparatus or system 140 may comprise the control system 141. The control system 141 may comprise a storage device 145 in which parameter ranges for operating parameter of the apparatus or system 140 are stored. The control system 141 may comprise an operating parameter determination system 142, which may comprise at least one microcontroller or other integrated circuit, such as an application specific integrated circuit (ASIC), field-programmable gate array (FPGA), processor, controller, or combination thereof. The operating parameter determination system 142 may be operative to determine operating parameters such as gas flow rate, gas flow velocity, and/or plasma source operating conditions (frequency and/or power) so as to ensure that (i) primary ions and/or electrons formed by the plasma source do not or at least not to a significant extent impinge on the surface to be treated, but (ii) at least one reactive and/or excited species that is formed by plasma gas interaction impinges on the surface.

The operating parameter determination system 142 may access data stored in storage device 145 to determine suitable operating parameters for the respective task. For illustration, depending on which material (e.g., which soft manner) is to be modified in which manner (e.g., increasing wettability or increasing adhesion), parameters or parameter ranges may be retrieved from storage device 145.

The control system 141 may be operative to determine the suitable operating parameters by operating the apparatus or system in a calibration routine. Alternatively or additionally, the control system 141 may be operative to determine the suitable operating parameters by performing simulations for determining the formation time and/or life time of one or several reactive and/or excited species of interest.

The control system 141 may be operative to adjust the operating parameters using open loop control or closed loop control. For illustration, and as will be explained in more detail, the presence of a desired reactive and/or excited species may be monitored and operating parameters may be adjusted when needed.

The control system 141 may comprise a wired or wireless interface. The control system 141 may be operative to allow an operator to review, modify, and/or adjust the manufacturing process via a wired or wireless interface. The control system 141 may be operative to allow an operator to review, modify, and/or adjust the manufacturing process via an interface operable for connecting to the operator's terminal device via a wide area network (WAN).

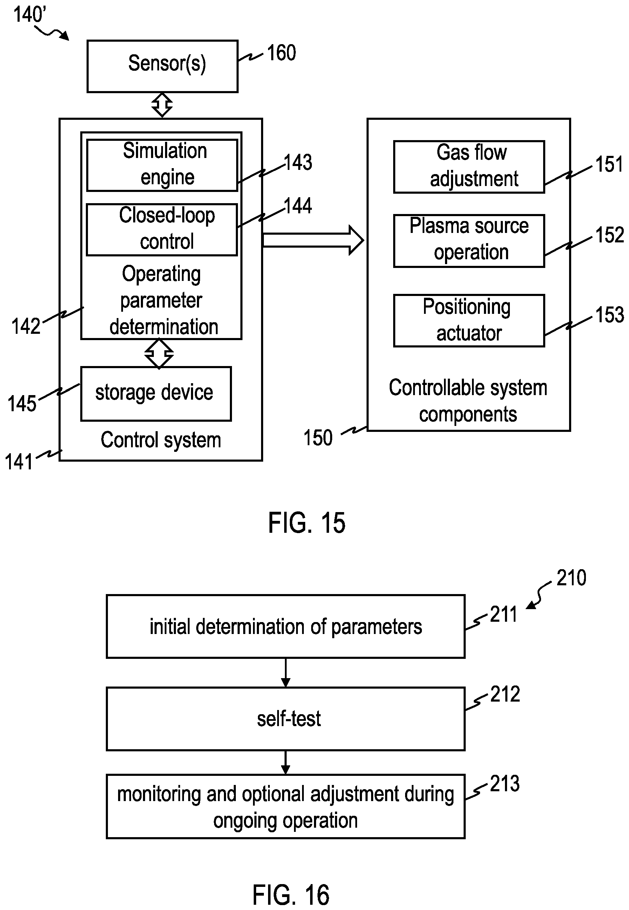

Figure 15 is a block diagram of an apparatus or system 140' which may be an additive manufacturing apparatus or system 140'.

The operating parameter determination component 142 may be operative to execute a simulation engine 143.

The simulation engine may be operative to simulate formation and/or life time of a desired reactive species for various parameters such as gas flow rate, plasma source power, and plasma source frequency. The operating parameter determination component 142 may determine suitable operating parameter ranges for storing in storage device 145, which may be accessed for subsequent use.

Alternatively or additionally, the operating parameter determination component 142 may be operative to execute a closed loop control 144. The closed loop control 144 may operate responsive to measurements captured by sensor(s) 160 during field operation of the apparatus or system 140'. The closed loop control 144 may be operative to issue control commands and/or warnings, depending on sensor readings received from the sensor(s) 160.

*Methods*

Methods disclosed herein may use the apparatus for performing additive manufacturing with surface modification. The surface modification may be attained by reactive and/or excited species that result from gas plasma interaction, possibly in a multi-step reaction process.

Process parameters such as a composition of a gas mix supplied via gas channel 40 and/or the energy employed, i.e. the plasma power, depend on the material to be treated, the effect to be created by the treatment, and the process used. The operating parameters may be determined in advance in order to optimize the plasma design and the plasma treatment parameters.

Figure 16 is a flow chart 210 of a method that may be performed by an apparatus or system. The method may be performed for optimizing the power and for ensuring that the plasma is operating as desired.

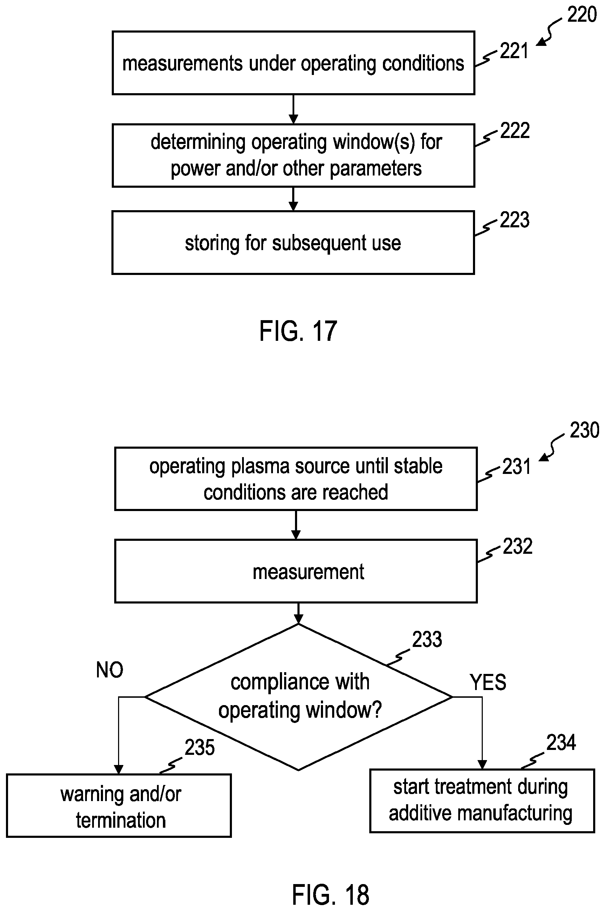

At step 211, an initial determination of operating parameters may be performed. An implementation of step 211 is described in more detail with reference to Figure 17 below.

At step 212, a self-test prior to article manufacture may be performed. An implementation of step 212 is described in more detail with reference to Figure 18 below.

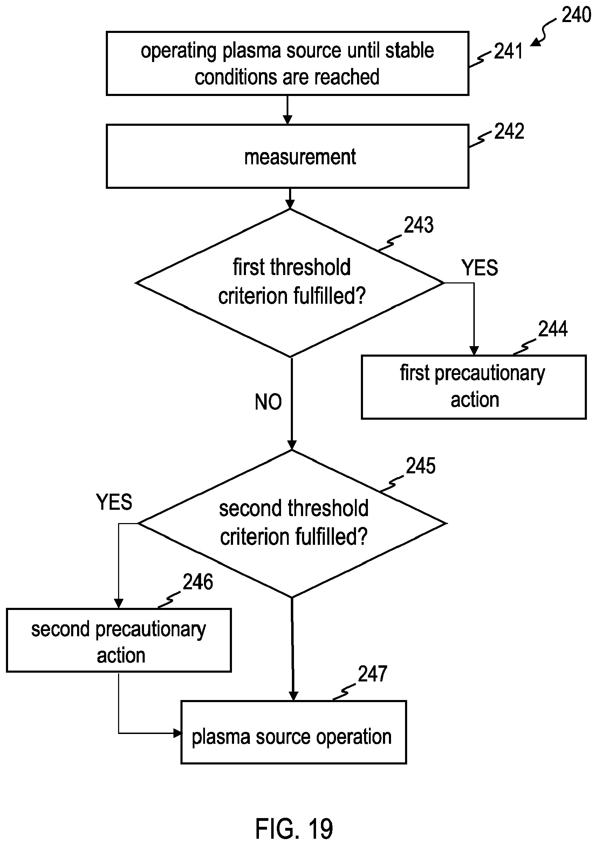

At step 213, monitoring of the plasma during application and, where appropriate, adjustment of the operation responsive to the monitoring is performed. An implementation of step 213 is described in more detail with reference to Figure 19 below.

Figure 17 is a flow chart of a procedure 220 that may be used to perform an initial determination of operating parameters. Procedure 220 may be used to implement step 211 in Figure 16.

At step 221, measurements are performed under operating conditions. For illustration, the plasma source is subjected to tests under operating conditions. A parameter space may be explored in this process, e.g., by varying frequency, power, or other plasma source operating parameters.

At step 222, a required power P (which may include information on voltage, current, frequency) may be determined in the form of an operating window, which may be defined as a range or several ranges including lower and upper limits for parameter choices.

This operating window takes into account possible variations due to self-test and operating conditions (which may take place under different humidity and temperature, for instance).

The appropriate power measurements for this range (based on defined proxy-values) are stored in a microprocessor or otherwise in the control system 141 (step 223).

For a specific application, the correct setting is selected from the stored data

Figure 18 is a flow chart of a procedure 230 that may be used to perform a self-test preceding the operation for manufacture of an article. This self-test is only a precautionary step to initialise the system and to obtain information about possible malfunctions before use. The procedure 230 may be performed to implement step 212 in the method of Figure 16.

At step 231, a burn-in period may optionally be performed for initialising the plasma source to reach stability.

At step 232, one or several measurements may be performed. For illustration, a proxy-power measurement may conducted. If the power lies within the previously determined operating window, the apparatus or system may be operated to perform surface treatment during the manufacturing process (steps 233, 234).

If the power lies outside the pre-determined operating window, a warning may be issued and/or operation may be terminated (steps 233, 235).

It is possible that a log be kept in the storage device 245 about the operation of the plasma source to provide a record about the functionality on an ongoing basis. Alternatively, this can be read out to a central processor.

Figure 19 is a flow chart of a procedure 240 that may be used to monitor operation of the apparatus or system during manufacture of an article. The procedure 240 may be performed to implement step 213 in the method of Figure 16.

The data from the self-test may be retrieved from a temporary or persistent storage device and may serve as initial input.

At step 241, the plasma source may be operated.

At step 242, during operation, the Proxy-Power value, P, may be computed at time intervals that may be fixed or variable (at, e.g., $\tau$ = 5 second intervals) and stored. The time interval, $\tau$, can have various values.

At steps 243, 244, if during the application the actual value P deviates from the operating window by less than a first threshold, the application can proceed as planned (steps 243, 245, 247).

If the actual value P deviates from the operating window by more than a first threshold (e.g., 30%), a first precautionary action may be performed (steps 243, 244). For illustration, a red warning can be shown. The plasma source is severely compromised and the application should be stopped. The electrode should be cleaned before next use. If this does not resolve the problem the plasma source has to be sent for repair or replacement.

If the actual value P deviates from the operating window by more than a second threshold % (e.g., 15%) and less than the first threshold (e.g., 30 %), a second precautionary action may be performed (steps 243, 245, 246). For illustration, an amber warning may be shown, to indicate that the electrode has (possibly) been contaminated. At this stage no action is necessary, but cleaning is advised directly after the application.

A log may be kept in the computing system about any one of the procedures described with reference to Figures 16 to 19, to thereby provide a record about the functionality of the plasma source on an ongoing basis.

Operation of the plasma system can be continuously followed using Bluetooth or other access connections to the internet and a corresponding interface on the operator's terminal device.

***Example - Ozone for Surface Treatment***

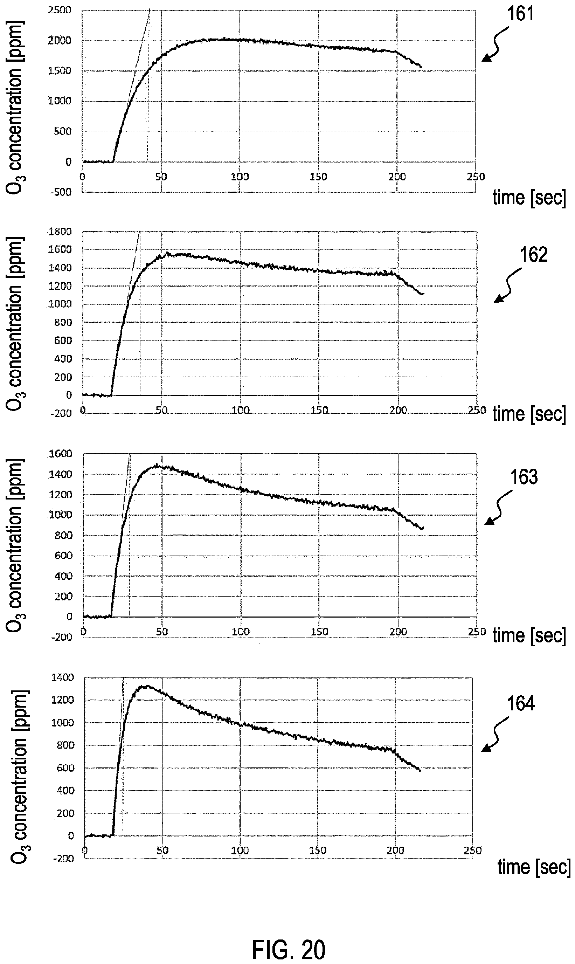

Figure 20 shows graphs 161-164 that depict ozone concentration as a function of time for different frequencies of the plasma source (f = 20 kHz for curve 161, f = 30 kHz for curve 262, f = 40 kHz for curve 163, and f = 50 kHz for curve 164).

After an initial phase (determined by transport effects of $O_3$ molecules to the measurement region) the concentration increases linearly until some saturation sets in, governed by production and loss processes.

The regime where the concentration increases linearly is used to determine the $O_3$ production rate. The $O_3$ production rate is governed by the size of the electrode, the power, the mode of operation and the construction of the electrode. The governing equation is:

$$dn/dt = P - n/\tau \qquad (2)$$

with n the Ozone density, P the production rate and $\tau$ the loss time.

The solution is

$$n = P\tau * (1 - e^{-t/\tau}) \qquad (3)$$

For small times, t, the solution can be linearized as

$$n = Pt \qquad (4)$$

Thus, the production rate can be determined from the linear gradient, P = n/t, at the onset of the increase.

The following production rates were obtained (using a thin film electrode with electrode length 5 cm):

| Frequency | ppm/s | $O_3$/s/cm | Power (W) |
|---|---|---|---|
| 20 kHz | 2.500/22 | $0{,}21 \times 10^{17}$ | 0,7 |
| 30 kHz | 1.800/18,3 | $0{,}19 \times 10^{17}$ | 0,9 |
| 40 kHz | 1.600/11,7 | $0{,}26 \times 10^{17}$ | 1,06 |
| 50 kHz | 1.400/6,7 | $0{,}39 \times 10^{17}$ | 1,17 |

The plasma source was integrated into a cooling flow channel of a 3D printer. The parameter space of the 3D printer was:

- Velocity of air flow: 0.1- 6 m/s
- Nominal volume flow: $60 - 4.000 \, cm^3/s$
- Application time per layer: 0.5 - 5 sec

The parameters of the plasma source used were:

- Electrode length: $4 \times 5\,cm = 20\,cm$
- Operating voltage. 4 kV
- Operating frequency: 40 kHz

At a nominal volume flow of 3.600 $cm^3$/s, an ozone concentration of $C_{O3}$ = 5.4 ppm was obtained.

The actual volume flow was much lower than the nominal value due to backpressure build up in the constricted cooling tube. The calculated concentration of $C_{O3}$ = 5.4 ppm is therefore only a lower limit.

The reactive species flux (RSF) which reaches the surface is RSF = $5.2 * 10^{17}$/A.

The result implies that the combination of production rate, operating parameters and mechanical positioning are suitable for achieving better manufacturing.

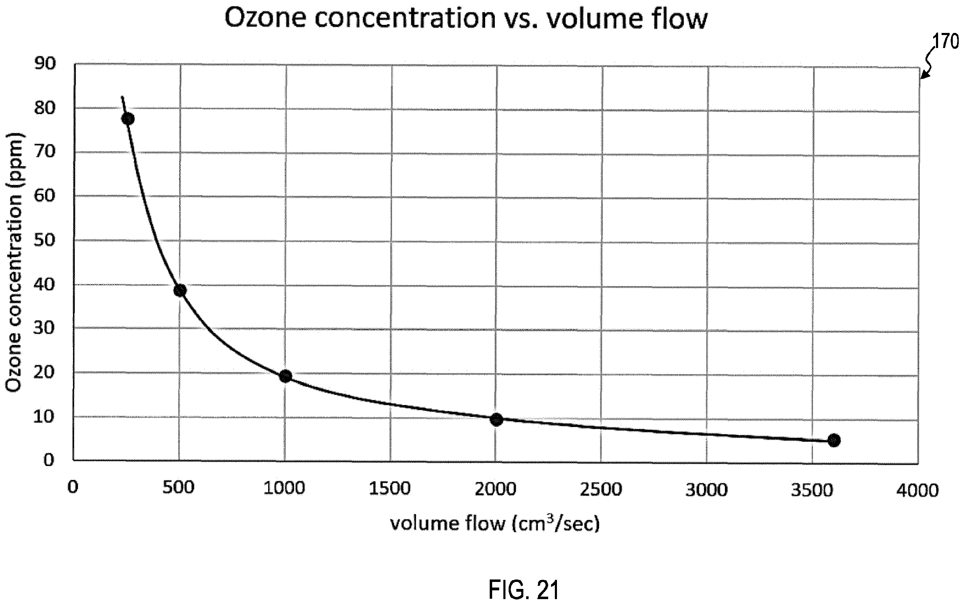

Figure 21 is a graph showing ozone concentration as a function of volume flow. As the cooling flow is reduced, the Ozone concentration increases, provided the plasma (and ozone) production remain the same. This results in the risk of ozone quenching,

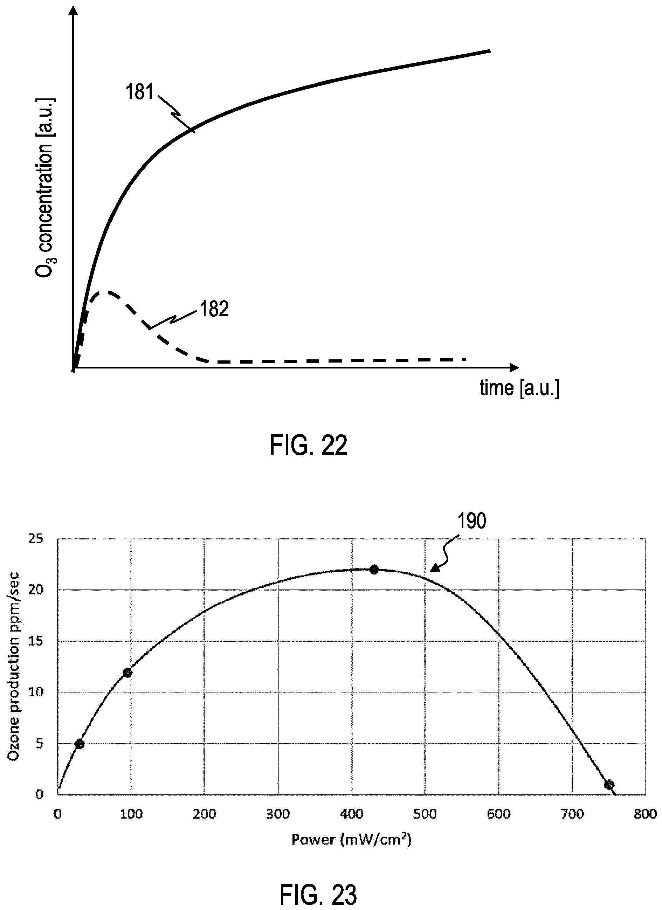

Ozone quenching can occur when, e.g., the temperature becomes too high. Ozone quenching leads to a dramatic change in the plasma air chemistry. This is illustrated in Figure 22. Figure 22 shows ozone concentration when the plasma source is operated at lower power (curve 181) and when the plasma source is operated at higher power (curve 182). For the higher power (curve 182), the ozone concentration decreases significantly. Curve 181 corresponds to operation in oxygen mode, while curve 182 corresponds to operation in nitrogen mode.

Figure 23 is a graph 190 that shows ozone production in dependence on plasma source power. at low power the increase in ozone production is almost linearly proportional to the power. As the power is increased it slows and eventually even effectively shuts the ozone production off. This shows that ozone is only a good tracer of reactive species at low power levels. A combination of $O_3$ and NO may be used as tracer for a wider range of powers.

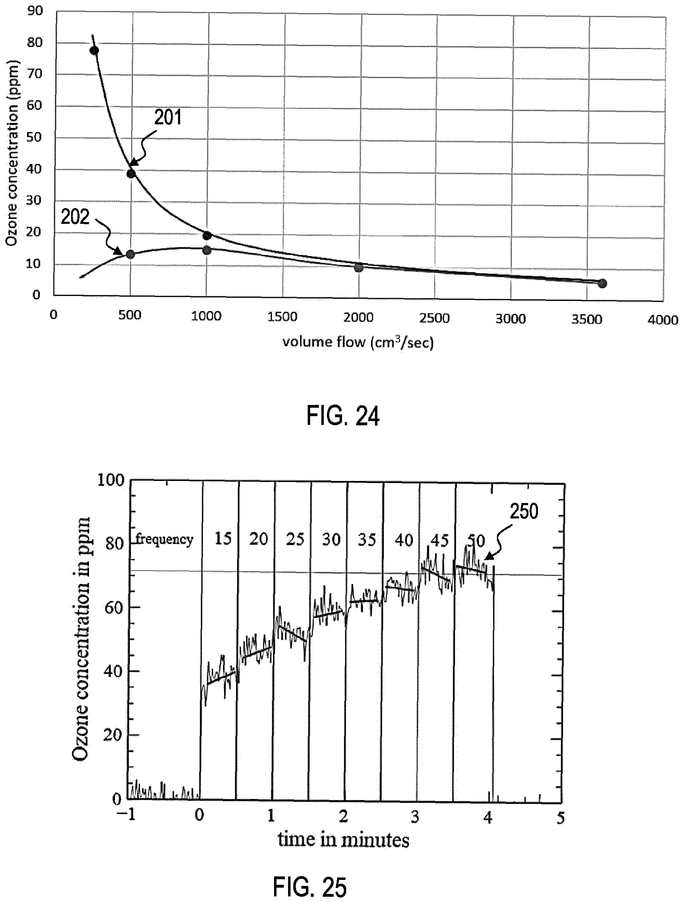

Figure 24 illustrates how power and cooling flow affect ozone concentration (as derivable from Figure 21 in combination with Figure 23). The quenching is depicted by curve 202. Curve 201 depicts an operating regime in which no quenching occurs.

From Figure 23, it is estimated that a nominal cooling flow less than 1.000 $cm^3$/s could result in a switch to Nitrogen dominated plasma-air reactions. This is a regime where a reduced effect is evidenced for modifying the surface. In other words, the improvement in the strength of the printed structure becomes less evident when the volume flow (i.e. the flow speed) is reduced. This is believed to be due to Ozone quenching and the associated changes in the plasma-air chemistry.

Improvement of the cohesion and strength of 3D additive manufacturing is attainable when the flux of reactive species remains in the realm which gave good results at nominal volume flows of 3.600 $cm^3$/s.

The flux of Ozone onto the treatment surface is, for a cross section A of the flow channel:

$$F_{O3} = 5,2 \times 10^{17} /A \quad O_3/s\,cm^2$$

independent of the air volume flow. The cross section of the cooling channel in the experiments was A = 0,3 $cm^2$. The total Flux of Ozone particles onto the treatment surface is then:

$$F_{O3} = 1,73 \times 10^{18} \quad O_3/s\,cm^2$$

The experiments show that good ozone-based modification of soft matter is attainable when

- the cooling flow is treated when operating the plasma source in the oxygen mode,
- reactive species fluxes are in the regime $10^{17}$ - $10^{19}$ particles/$cm^2$/s, and
- nominal cooling flows are in the regime > 1000 $cm^3$/s.

Ozone flux can be regarded as a marker which is representative for the reactive species as a whole (oxygen-based chemistry). This is true if the life times of the reactive species are longer than the transport time. If some species have shorter life times, then the effective reactive species flux will decrease as the volume flow is decreased.

Ozone quenching can occur for, e.g., higher plasma source powers, as mentioned above. Oxygen quenching is a process where the Oxygen chemistry moves towards a Nitrogen chemistry with corresponding differences in life times of excited species, energy levels etc. For enhanced monitoring, both ozone and, e.g., NO can be monitored as markers to monitor reactive species.

Additional measurements in the 3D Additive Manufacturing set-up

Tests were carried out for the following parameters:

| | |
|---|---|
| Total length of electrodes: | 20 cm |
| Individual length of electrodes: | 5 cm |
| Plasma distance from treatment surface: | 1 - 6 cm |
| Operating voltage: | 4 kV |
| Operating frequency: | 10 - 50 kHz |
| Plasma power at 40 kHz: | 3,5 W |

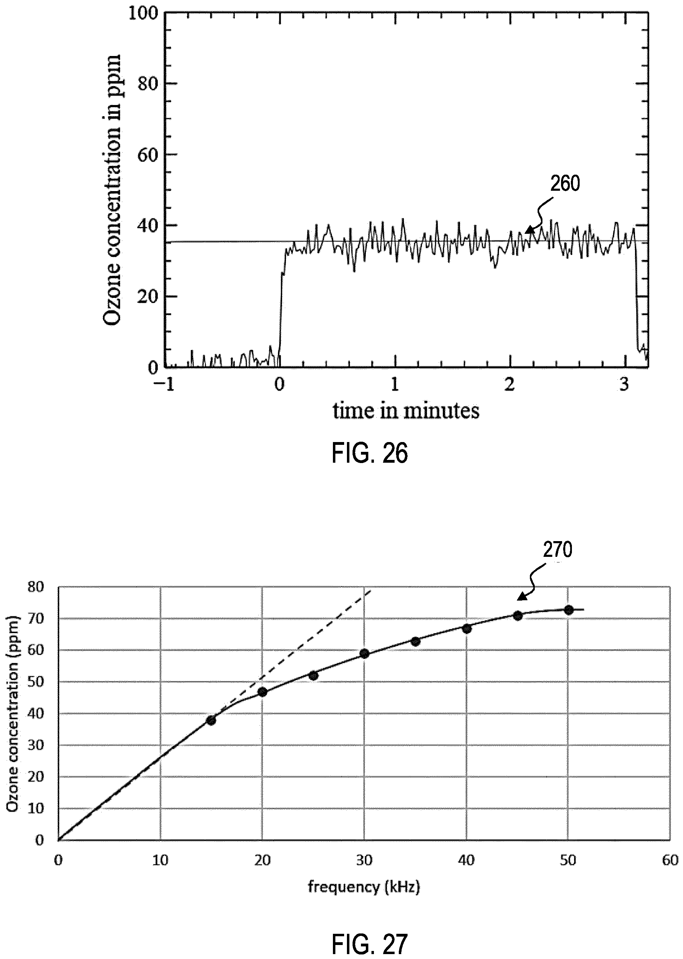

Figure 25 shows ozone concentration 250 as a function of time for different frequencies of the plasma source. At half of the maximum gas flow (nominal 1.800 $cm^3$/s) and 4 kV, the average Ozone concentration at 40 kHz is 67 +/- 3 ppm. For comparison, Figure 26 shows ozone concentration 260 as a function of time for full air flow (nominal 3.600 $cm^3$/s) and 4 kV. The average Ozone concentration at 40 kHz is 67 +/- 3 ppm. This implies that the production rate of $O_3$ is independent of air flow in the range of observation (nominal air flow 1.800 to 3.600 $cm^3$/s).

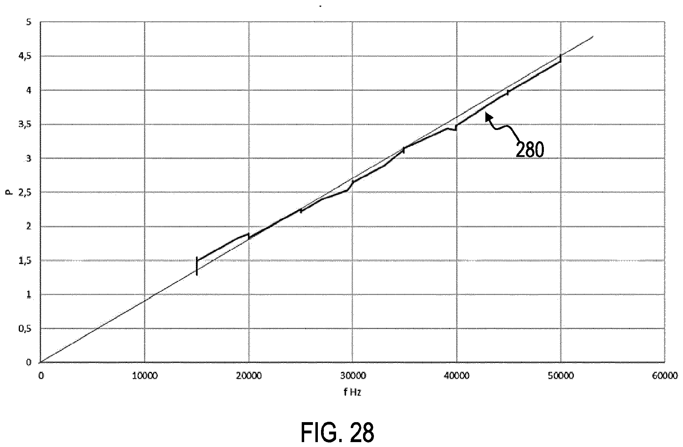

Figure 27 shows a graph depicting ozone concentration 270 for a nominal air flow of 3.600 $cm^3$/s as a function of frequency. The ozone concentration increases with frequency, but not linearly. Figure 28 shows that the plasma power 280 (thick line) increases approximately linearly as a function of frequency.

***Possible Applications***

The apparatuses, systems, and methods may be used in association with 3D printing, without being limited thereto.

The apparatuses, systems, and methods may be used for plasma treatment and activation of soft matter materials including (but not exclusively) colloids, polymers, foams, gels, granular materials, paste-like and thermo-setting materials, stretchable conducting inks, rubbery as well as some biological materials, metals, alloys, ceramics composites in their soft matter (granular, colloidal or paste-like) state.

The apparatuses, systems, and methods may be used for treating a material during the manufacturing process of an article from soft matter materials.

The apparatuses, systems, and methods may be used in association with 3D printing, die casting and other forms of manufacturing that involve the transition from the soft matter to plastic and/or solid states.

The apparatuses, systems, and methods may be used to provide one, several, or all of:

- enhanced cohesion strength,
- enhanced shear strength,
- improved bonding,
- color,
- reflectivity,
- chemical properties,
- electrical conductivity,
- thermal conductivity,

without being limited thereto.

The apparatuses, systems, and methods use a plasma source employed that may be selected from a group consisting of DBD sources, SMD sources, Corona Discharge sources, Microwave sources, Jet sources, gliding arc sources, hollow cathode sources, glow discharge sources, direct discharge sources, without being limited thereto.

The apparatuses, systems, and methods may be particularly suitable for performing a plasma modification of materials used for and during the process of 3D printing.

The apparatuses, systems, and methods may be used during an additive manufacturing process to treat one or several of the following:

- PLA ... Polylactide (Polylactic acid)
- PET ... Polyethylenterephthalate and the sub-group PET-G Glycole modified Polyethylenterephthalate
- ABS ... Acrylnitril-Butadien-Styrol

- ASA ... Acrylester-Styrol-Acrylnitril
- HIPS ... High Impact Polystyrene
- PA ... Polyamide
- PC ... Polycarbonate
- PMMA... Polymethylmethacrylate
- PP ... Polypropylene
- PVA... Polyvinyl alcohol
- PBT ... Polybutylenterephthalat
- TPU ... Thermoplastisches Polyurethan
- TPC ... ThermoPlastic Copolyester
- PEI ... Polyetherimide
- PEEK... Polyetheretherketon
- PEKK ... Polyetherketonketon
- PVDF ... Polyvinylidenfluorid
- metals,
- metal alloys,
- ceramics composites etc.

or various material combinations of the above mentioned materials, as well as glass and carbon fiber and metal powder filled variants.

The apparatuses, systems, and methods may be used for performing a plasma treatment of colloids, powders etc. before and during laser treatment (such as melting, sintering and/or fusion) and/or production.

The apparatuses, systems, and methods may be used for performing a plasma treatment of colloids, powders etc. before and during thermal treatment and/or production.

The apparatuses, systems, and methods may be used for performing a plasma treatment during 3D printing of metallic and/or metallic alloys parts

The apparatuses, systems, and methods may be used for performing a plasma treatment during 3D printing of ceramic and/or ceramic composites parts. For example, in the 3D printing of ceramic parts for medical implants (or, in fact, also in medical parts made from other materials), the plasma treatment may provide for sterilization while printing (noting that this effect may be achieved irrespective of an increase in structural properties).

A variety of plasma sources (such as cold atmospheric plasma sources can be used in principle, employing air or another gas or gas mix.

The apparatuses, systems, and methods may be configured such that surface treatment is performed independent of the motion direction of the nozzle.

The apparatuses, systems, and methods may be configured such that surface activation occurs prior to (e.g., immediately prior to) the application of the next layer, so that even short-lived reactive species can be employed for activation of the soft matter used.

Alternatively, if only longer-lived species are required for the desired application, the distance between the plasma source and the processing material may be increased. For a gas/air flow speed of v (cm/s) and a life time t (s) of the unwanted specie, the distance d is set to be > vt.

The apparatuses, systems, and methods may use a Surface Micro-Discharge (SDM) Plasma Source is used, which operates in ambient air.

Various effects and advantages are attained by the apparatuses, systems, and methods disclosed herein. The apparatuses, systems, and methods allow characteristics of a material or article to be modified. The apparatuses, systems, and methods allow a plasma source to be utilized while mitigating at least some of the shortcomings of conventional techniques with regard to plasma source positioning. The apparatuses, systems, and methods allow modifications of a material or article to be implemented with the use of a plasma source, but without being limited to an interaction of a material or article with the electrons and/or ions that are generated by the plasma source itself.

The apparatuses, systems, and methods may be used in association with a 3D printing system, without being limited thereto.

**Claims**

1. An additive manufacturing apparatus or system, comprising:

   a supply mechanism operative to supply material for additive manufacturing;
   at least one gas flow channel operative to supply a gas flow to a region at which the material is incorporated into an article to be manufactured by additive manufacturing; and

a plasma source operative to generate a plasma at a distance from the region at which the material is incorporated into the article to be manufactured, to cause at least one reactive species and/or at least one excited species to be generated and entrained in the gas flow and delivered to the region in the gas flow.

2. The additive manufacturing apparatus or system of claim 1, wherein the plasma source is arranged within the gas flow channel or adjacent the gas flow channel.

3. The additive manufacturing apparatus or system of claim 1 or claim 2, wherein the gas flow channel is operative to supply a flow of at least one cooling gas, optionally further comprising a cooling gas source and/or a temperature control mechanism operative to control a temperature of the cooling gas to aid in solidification of the material.

4. The additive manufacturing apparatus or system of any one of the preceding claims, operative to set a flow velocity of the gas flow

   such that the flow velocity multiplied by a formation time of the at least one reactive species and/or at least one excited species is less than a distance between the plasma source and the region, the distance being measured along a gas flow path extending along the gas flow channel, and/or

   such that the flow velocity multiplied by a life time of the at least one reactive species and/or at least one excited species is greater than a distance between the plasma source and the region, the distance being measured along a gas flow path extending along the gas flow channel.

5. The additive manufacturing apparatus or system of any one of the preceding claims, wherein the supply mechanism comprises a discharge orifice, in particular a discharge nozzle, for the material.

6. The additive manufacturing apparatus or system of claim 5, operative to set a flow velocity of the gas flow

   such that the flow velocity multiplied by a formation time of the at least one reactive species and/or at least one excited species is less than a distance between the plasma source and the discharge orifice, the distance being measured along a gas flow path extending along the gas flow channel, and/or

   such that the flow velocity multiplied by a life time of the at least one reactive species and/or at least one excited species is greater than a distance between the plasma source and the discharge orifice, the distance being measured along a gas flow path extending along the gas flow channel.

7. The additive manufacturing apparatus or system of claim 5 or claim 6, further comprising at least one actuator operative to displace the discharge orifice along a movement direction, wherein the at least one gas flow channel comprises first and second gas outlet areas spaced along the movement direction.

8. The additive manufacturing apparatus or system of any one of claims 5 to 7, wherein the at least one gas flow channel comprises a ring-shaped gas outlet surrounding the discharge orifice.

9. The additive manufacturing apparatus or system of any one of the preceding claims, wherein the plasma source is operative to cause at least one reactive species to be generated and entrained in the gas flow, the at least one reactive species being operative to increase surface wettability and/or adhesion strength between layers in the additive manufacturing, optionally wherein the reactive species comprise ozone and/or polar OH groups and/or polar ON groups.

10. The additive manufacturing apparatus or system of any one of the preceding claims, wherein the plasma source is operative to cause at least one excited species to be generated and entrained in the gas flow, the at least one excited species being operative to effect Penning ionization for surface activation and/or modification.

11. The additive manufacturing apparatus or system of any one of the preceding claims, wherein the plasma source is a Surface Micro-Discharge, SMD, plasma source, optionally wherein a structured electrode of the SMD plasma source extends along a longitudinal axis of at least a portion of the gas flow channel.

12. The additive manufacturing apparatus or system of any one of the preceding claims, wherein one, several, or all of the following apply:

- the apparatus or system comprises an actuator operative to position the plasma source such that plasma is produced at a distance of at least 1 cm and/or at most 6 cm from the region at which the material is incorporated into the article to be manufactured;
- the at least one gas flow channel is dimensioned such that a flow velocity of the gas flow is at least 0.5 m/s, preferably at least 1 m/s, more preferably at least 5 m/s, even more preferably at least 10 m/s;
- the plasma source is operative to operate in oxygen plasma mode;
- a sum of formation time and life time of excited species is at least 5 ms;
- a sum of formation time and life time of species that are capable of producing electrons by a Penning effect is at least 5 ms;
- the apparatus or system is operative such that an operation temperature of an electrode of the plasma source is less than or equal to 60° C;
- the apparatus or system is operative to provide a reactive species flux of at least $10^{10}/cm^2s$, preferably at least $10^{14}/cm^2s$, more preferably at least $10^{17}/cm^2s$;
- the apparatus or system is operative to provide a reactive species flux of at most $10^{25}/cm^2s$, preferably at most $10^{22}/cm^2s$, more preferably at most $10^{19}/cm^2s$;
- the apparatus or system is operative to provide a reactive species flux of at least $10^{17}/cm^2s$ and/or at most $10^{19}/cm^2s$;
- the apparatus or system is operative to provide surface activation in proximity to the region at which the material is incorporated into the article to be manufactured and prior to incorporation of the material into the article.

13. An additive manufacturing method, comprising:

supplying material for additive manufacturing;
supplying, via at least one gas flow channel, a gas flow to a region at which the material is incorporated into an article to be manufactured by additive manufacturing;
generating, by a plasma source, a plasma at a distance from the region at which the material is incorporated into the article to be manufactured, to thereby cause at least one reactive species and/or at least one excited species to be generated and entrained in the gas flow and delivered to the region in the gas flow.

14. The additive manufacturing method of claim 13, which is performed by the additive manufacturing apparatus or system of any one of claims 1 to 12.

15. Use of the manufacturing apparatus or system of any one of claims 1 to 12 for plasma modification and/or functionalization of soft matter in additive manufacturing.

20

30

29

10

11

FIG. 1

20

41

30

42

43

10

11

FIG. 2

FIG. 3

FIG. 4

FIG. 5

FIG. 6

FIG. 7

FIG. 8

FIG. 10

100

43

30

40

20

10

41

61

62

63

64

65

FIG. 9

110

111

115

FIG. 11

120

121

125

122

FIG. 12

130

131   132   133   135

134

FIG. 13

140

**Operating parameter determination** 142

**storage device** 145

**Control system** 141

**Gas flow adjustment** 151

**Plasma source operation** 152

**Positioning actuator** 153

**Controllable system components** 150

FIG. 14

140'

Sensor(s) —— 160

Simulation engine —— 143

Closed-loop control —— 144

142 —— Operating parameter determination

145 —— storage device

141 —— Control system

Gas flow adjustment —— 151

Plasma source operation —— 152

Positioning actuator —— 153

150 —— Controllable system components

FIG. 15

210

initial determination of parameters —— 211

self-test —— 212

monitoring and optional adjustment during ongoing operation —— 213

FIG. 16

220

measurements under operating conditions ⌇221

↓

determining operating window(s) for power and/or other parameters ⌇222

↓

storing for subsequent use ⌇223

## FIG. 17

230

operating plasma source until stable conditions are reached ⌇231

↓

measurement ⌇232

↓

NO ◁──── compliance with operating window? ────▷ YES

233

warning and/or termination ⌇235

start treatment during additive manufacturing ⌇234

## FIG. 18

240

241

operating plasma source until stable
conditions are reached

242

measurement

243

first threshold
criterion fulfilled?

YES

244

first precautionary
action

NO

245

YES

second threshold
criterion fulfilled?

246

second precautionary
action

247

plasma source operation

FIG. 19

FIG. 20

## Ozone concentration vs. volume flow

FIG. 21

FIG. 22

FIG. 23

FIG. 24

FIG. 25

FIG. 26

FIG. 27

FIG. 28

Europäisches
Patentamt

European
Patent Office

Office européen
des brevets

# EUROPEAN SEARCH REPORT

Application Number

EP 22 18 9947

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2015/126431 A1 (EMPIRE TECHNOLOGY DEV LLC [US]) 27 August 2015 (2015-08-27) * paragraph [0016] – paragraph [0036] * * paragraph [0058] – paragraph [0065] * * examples 1-3 * ----- | 1-15 | INV. B29C64/194 B29C64/371 B33Y10/00 B33Y30/00 B33Y40/00 B22F10/50 B22F12/70 |
| X | EP 3 943 277 A1 (FRAUNHOFER GES FORSCHUNG [DE]) 26 January 2022 (2022-01-26) * claims * * figures * * paragraph [0001] – paragraph [0050] * * paragraph [0012] – paragraph [0021] * ----- | 1-10, 12-15 | |
| X | WO 2016/011290 A1 (APPLIED MATERIALS INC [US]) 21 January 2016 (2016-01-21) * figures 1A-1C * * page 2, line 25 – page 4, line 7 * * page 5, line 1 – page 22, line 28 * * page 14, line 23 – page 16, line 30 * ----- | 1-15 | |
| X | WO 2018/156458 A1 (ESSENTIUM MAT LLC [US]) 30 August 2018 (2018-08-30) * paragraph [0005] – paragraph [0040] * * claims 1-20 * ----- | 1,2,5,8, 11-15 | TECHNICAL FIELDS SEARCHED (IPC) B29C B22F B33Y |

The present search report has been drawn up for all claims

| Place of search | Date of completion of the search | Examiner |
|---|---|---|
| The Hague | 24 January 2023 | Whelan, Natalie |

EPO FORM 1503 03.82 (P04C01)

## ANNEX TO THE EUROPEAN SEARCH REPORT
## ON EUROPEAN PATENT APPLICATION NO.

EP 22 18 9947

This annex lists the patent family members relating to the patent documents cited in the above-mentioned European search report.
The members are as contained in the European Patent Office EDP file on
The European Patent Office is in no way liable for these particulars which are merely given for the purpose of information.

24-01-2023

| Patent document cited in search report | | Publication date | Patent family member(s) | | Publication date |
|---|---|---|---|---|---|
| WO 2015126431 | A1 | 27-08-2015 | CN | 106029333 A | 12-10-2016 |
| | | | US | 2016325487 A1 | 10-11-2016 |
| | | | WO | 2015126431 A1 | 27-08-2015 |
| EP 3943277 | A1 | 26-01-2022 | CN | 114030175 A | 11-02-2022 |
| | | | DE | 102020209033 A1 | 20-01-2022 |
| | | | EP | 3943277 A1 | 26-01-2022 |
| | | | JP | 2022020586 A | 01-02-2022 |
| | | | US | 2022016835 A1 | 20-01-2022 |
| WO 2016011290 | A1 | 21-01-2016 | CN | 106660270 A | 10-05-2017 |
| | | | DE | 112015003334 T5 | 30-03-2017 |
| | | | JP | 2017526815 A | 14-09-2017 |
| | | | SG | 11201610906X A | 27-02-2017 |
| | | | TW | 201613744 A | 16-04-2016 |
| | | | US | 2017203364 A1 | 20-07-2017 |
| | | | WO | 2016011290 A1 | 21-01-2016 |
| WO 2018156458 | A1 | 30-08-2018 | CN | 110621476 A | 27-12-2019 |
| | | | EP | 3568281 A1 | 20-11-2019 |
| | | | US | 2020298479 A1 | 24-09-2020 |
| | | | US | 2022379557 A1 | 01-12-2022 |
| | | | WO | 2018156458 A1 | 30-08-2018 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020151833 A1
- WO 2017013211 A1
- EP 2399432 A1

**Non-patent literature cited in the description**

- **SAKIYAMA et al.** *Phys.D, Appl. Phys.,* 2012, vol. 45, 425201